# EUROPÄISCHE PATENTSCHRIFT

(11) **EP 1 922 962 B1**
(45) Veröffentlichungstag und Bekanntmachung des Hinweises auf die Patenterteilung: **10.06.2009**
(21) Anmeldenummer: 06023668.4
(22) Anmeldetag: 14.11.2006
(51) Int. Cl.: A47J 31/06

(54) **Einrichtung zum Zubereiten eines Brühgetränks**
Device for the preparation of a hot beverage
Dispositif pour la préparation d'une boisson chaude

(43) Veröffentlichungstag der Anmeldung: 21.05.2008
(73) Patentinhaber: WMF WÜRTTEMBERGISCHE METALLWARENFABRIK AG, 73309 Geislingen/Steige (DE)
(72) Erfinder: Abele, Werner, 89558 Böhmenkirch (DE)
(74) Vertreter: Grünecker, Kinkeldey, Stockmair & Schwanhäusser Anwaltssozietät

(56) Entgegenhaltungen:
- DE-U1- 8 127 268

## Beschreibung

Die Erfindung bezieht sich auf eine Einrichtung zum Zubereiten von Brühgetränken der im Oberbegriff von Anspruch 1 erläuterten Art.

Eine derartige Einrichtung ist aus der US 6 802 246 B1 bekannt. Die bekannte Brüheinrichtung enthält einen Brühbehälter, der an seinem Boden mit einer Auslassöffnung versehen ist, die mit einem Ventil absperrbar ist. Im Deckel des Behälters ist eine Halterung für eine handelsübliche, mechanische Schaltuhr vorgesehen. Derartige Schaltuhren enthalten zwei gegeneinander verdrehbare Gehäuseteile, wobei der Grad der Verdrehung ein Maß für die eingestellte Zeit ist. Nach dem Einstellen der Zeit kehren die beiden Gehäuseteile in ihre ursprüngliche Ausrichtung zurück. Am drehbaren Gehäuseteil ist ein Betätigungsvorsprung vorgesehen, der in der ursprünglichen, ausgerichteten Stellung auf ein Hebelgetriebe drückt, das außerhalb des Brühraums im Behälter zum Ventil führt und das Ventil öffnet, wenn sich der Betätigungsvorsprung in Eingriff mit dem Hebelgetriebe befindet. Es ist weiterhin eine Verriegelungseinrichtung vorgesehen, die die Schaltuhr in ihrer eingestellten Stellung blockiert. Diese Verriegelung muss am Beginn des Ziehvorganges gelöst werden, damit die Schaltuhr ablaufen kann. Im Gebrauch werden sowohl die Teeblätter als auch das Wasser in den Brühbehälter gefüllt, wobei die Schaltuhr nach Ablauf der manuell eingestellten Ziehzeit das Ventil öffnet, so dass das fertige Getränk aus dem Brühbehälter auslaufen kann. Die bekannte Einrichtung hat mehrere Nachteile. Zum einen ist immer dann, wenn sich die Schaltuhr in einem nicht-aufgezogenen Zustand befindet, d.h. in der Ausgangsposition, das Ventil notwendigerweise offen, da Ausgangs- und Endposition der Schaltuhr identisch sind und in der Endposition die Schaltuhr das Ventil öffnen soll. Dies bedeutet, dass vor dem Einfüllen von Wasser und Teeblätter die Zeit eingestellt und die Schaltuhr verriegelt werden muss, was für den Benutzer eine gewöhnungsbedürftige Reihenfolge der Arbeitsschritte darstellt, da normalerweise immer erst die Zubereitung des Getränks vorbereitet und dann die Zeit eingestellt wird. Weiterhin muss die Schaltuhr, wenn sie überhaupt zum Reinigen entfernbar ist, immer exakt in einer gleichen vorgegebenen Position wieder eingebaut werden, da ansonsten die Zuordnung des Betätigungsvorsprunges zur eingestellten Zeit verändert wird.

Eine weitere Einrichtung zum Zubereiten eines Brühgetränks ist aus dem DE 81 27 268 U1 bekannt. Diese Einrichtung enthält eine mechanische Schaltuhr, mit deren bewegbaren Gehäuseteil eine Nockenfläche verbunden ist, die in der Ausgangs- und Endstellung der Uhr mit einer Ausnehmung versehen ist. An der Nockenfläche liegt ein Hebelgetriebe an, das normalerweise ein Ventil zum Verschließen des Auslasses in seine Schließstellung drückt. Sobald sich jedoch die Ausnehmung über das Hebelgetriebe bewegt hat, schwenkt das Ventil nach unten und gibt den Auslass frei. Auch diese Einrichtung hat die bereits oben beschriebenen Nachteile. Zusätzlich ergibt sich hier das Problem, dass das gesamte Gewicht des eingefüllten Brühwassers auf das Ventil einwirkt und bestrebt ist, dieses in seiner Offenstellung zu bewegen. Es wird deshalb eine nicht unbeträchtliche Reibungskraft auf die Nockenfläche ausgeübt, die zu einem erhöhten Verschleiß der Nockenfläche führt. Ein Abrieb an der Nockenfläche bedeutet jedoch, dass das Ventil nicht mehr dicht schließt, so dass die Einrichtung wohl nach relativ kurzer Zeit tropft.

Der Erfindung liegt die Aufgabe zugrunde, eine Einrichtung der genannten Art bereitzustellen, die zuverlässig in der Funktion und einfach in der Bedienung ist.

Die Aufgabe wird durch die im Anspruch 1 angegebenen Merkmale gelöst.

Durch die erfindungsgemäße Ausgestaltung kann die Schaltuhr zum Reinigen entnommen werden, und kann wieder am Brühbehälter befestigt werden, ohne dass darauf geachtet werden muss, in welcher Stellung die Schaltuhr befestigt wird. Mit anderen Worten, die Schaltuhr kann in irgendeiner Stellung an der Halterung befestigt werden, ohne dass sich dies auf den Ablauf der Brühzeit auswirkt.

Diese Funktion wird auf besonders einfache Weise durch eine handelsübliche Schaltuhr mit Weckerfunktion gewährleistet, wobei die Weckerfunktion eine zweite Achse aufweist, die im Abstand zur Drehachse der Schaltuhr angeordnet ist und durch eine Restspannung der Uhrwerksfeder verdreht wird, wobei die Restspannung erst dann freigesetzt wird, wenn die eingestellte Zeit abgelaufen ist. Normalerweise wird diese zweite Achse zum Betätigen eines Klingelwerks eingesetzt; für die vorliegende Erfindung wird diese zweite Achse zweckentfremdet und zum Verdrehen des Exzenters benutzt, der wiederum das Absperrorgan öffnet.

Ein sich durch das Innere des Brühraums erstreckendes Verbindungselement, das das Betätigungselement mit dem Absperrorgan verbindet, stellt eine konstruktiv besonders einfache Lösung dar und stellt sicher, dass das Absperrorgan sowohl mit dem Gewicht des eingefüllten Wassers als auch mit dem Gewicht des Verbindungselementes in seine Schließstellung gedrückt wird.

Die stabförmige Ausbildung des Verbindungselements mit dem Absperrorgan an einem Ende und dem Betätigungselement am anderen Ende ist eine robuste und besonders einfache Konstruktion.

Die Anordnung des Verbindungselements in einer Führung, die von der Montageachse durchsetzt wird, stellt sicher, dass sich das Verbindungselement beim Aufsetzen der Schaltuhr in seiner geschlossenen Stellung befinden kann.

Das Absperrorgan wird bevorzugt durch eine Kippbewegung zwischen seiner Schließ- und seiner Offenstellung bewegt. Eine derartige Kippbewegung ist konstruktiv einfach zu bewerkstelligen und erhöht darüber hinaus die Schließkraft durch den Einfluss der Schwerkraft.

Um die Bewegung in die Offenstellung präziser zu gestalten, ist dem Absperrorgan bevorzugt eine Kippführung zugeordnet.

Die Demontage der erfindungsgemäßen Einrichtung zum Zwecke der Reinigung wird erleichtert, wenn die Verbindungseinrichtung in einem Gehäuse untergebracht ist, das entfernbar im Brühraum angeordnet ist.

Zweckmäßigerweise enthält das Gehäuse auch die Halterung für die Schaltuhr, so dass konstruktiv eine feste Beziehung zwischen der Verbindungseinrichtung und der Schaltuhr hergestellt wird.

Die Reinigung wird weiter erleichtert, wenn das Gehäuse mit einer Gehäuseöffnung für das Abfließen des Brühgetränks abgedichtet in einer Öffnung des Brühbehälters sitzt. Diese Konstruktion ist besonders dann zweckmäßig, wenn das Gehäuse über eine Siebanordnung mit dem Brühraum in Verbindung steht, so dass ein Ausströmpfad für das Brühgetränk definiert wird, der sich durch die Siebanordnung in das Gehäuse und anschließend aus der Auslasseinrichtung erstreckt. Mit dieser Ausgestaltung steht eine sehr große Behälteröffnung zur Verfügung, durch die Teeblätter oder dgl. sehr schnell ausgespült werden können, während das Innere des Gehäuses selbst, in dem sich die Verbindungseinrichtung und das Absperrorgan befindet, nur mit dem Brühgetränk in Verbindung kommen, und deshalb weniger verschmutzen.

Ein Ausführungsbeispiel der Erfindung wird nachfolgend anhand der Zeichnungen näher erläutert. Es zeigen:
- Fig. 1: eine schematische, längsgeschnittene Darstellung einer erfindungsgemäßen Einrichtung in Schließstellung,
- Fig. 2: den Schnitt II - II aus Fig. 1,
- Fig. 3: eine Darstellung der Einrichtung gemäß Fig. 1 in Offenstellung,
- Fig. 4: den Schnitt IV - IV aus Fig. 3, und
- Fig. 5: eine auseinandergezogene, perspektivische Darstellung von Bestandteilen der erfindungsgemäßen Einrichtung.

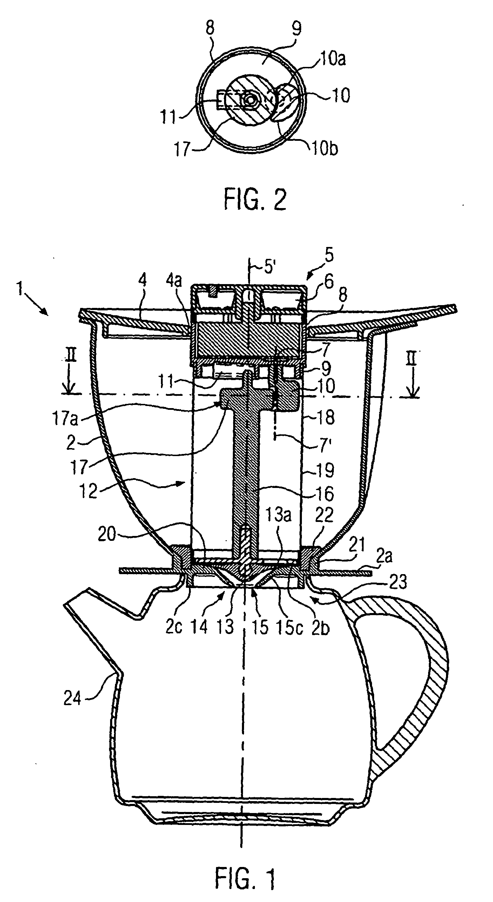

Aus Fig. 1 ist in schematischer Darstellung eine erfindungsgemäße Einrichtung 1 zum Zubereiten eines Brühgetränks, wie beispielsweise Tee, ersichtlich. Die Einrichtung 1 enthält einen Brühbehälter 2, der einen Brühraum 3 umschließt und mit einem abnehmbaren Deckel 4 nach oben hin abgeschlossen ist. Der Deckel 4 ist mit einer mittigen Öffnung 4a versehen, durch die eine bevorzugt mechanische Schaltuhr 5 ragt.

Der Brühbehälter 2 enthält einen unteren, verbreiterten Rand 2a, mit dem er auf herkömmliche Aufnahmegefäße, dargestellt ist eine Kanne, aufgesetzt werden kann und einen Bodenbereich 2b. Der Brühbehälter 2 kann entweder als gesonderter Behälter ausgebildet sein, der mit einer Vielzahl herkömmlicher Aufnahmegefäße zusammenwirken kann, oder er wird zusammen mit einem Aufnahmegefäß, beispielsweise einer Kanne oder einem Trinkgefäß, als Set bereitgestellt. Um den Sitz und die Zentrierung auf dem Aufnahmegefäß zu verbessern, kann vom Rand 2a oder vom Bodenbereich 2b ein Zentrierring 2c nach unten hin vorstehen, dessen äußerer Durchmesser kleiner als die obere Öffnung der meisten herkömmlichen Aufnahmegefäße ist, an deren Aufnahmevolumen das Volumen des Brühbehälters 2 angepasst ist.

Die mechanische Schaltuhr 5 ist von handelsüblichem Typ und enthält ein Uhrwerk mit einer Uhrwerksfeder, die durch Verdrehen eines Handknaufes 6 um eine Achse 5' gespannt wird. Der Winkelbereich der Verdrehung des Knaufes 6 aus seiner Null-Stellung ist ein Maß für die eingestellte Zeit. Anschließend dreht sich der Handknauf unter Entlastung der Uhrwerksfeder wieder in seine Null-Stellung zurück. Bevorzugt wird eine Schaltuhr 5 mit Weckerfunktion eingesetzt, wobei die Weckerfunktion eine Welle 7 enthält, die von einer Restspannung der Feder um eine Achse 7' um bevorzugt eine halbe bis eine dreiviertel Umdrehung drehend angetrieben wird, sobald der Handknauf 6 in seine Null-Position zurückgekehrt ist. Die Achse 7' erstreckt sich parallel und im Abstand zur Achse 5', und die Welle 7 steht von der dem Handknauf 6 gegenüberliegenden Seite der Schaltuhr 5 vor und dreht sich zusammen mit der Schaltuhr um die Achse 5'.

Die Schaltuhr 5 ist in einer Halterung 8 aufgenommen, die an der dem Handknauf 6 abgewandten Seite eine Montageplatte 9 enthält, durch die sich die Welle 7 erstreckt. Auf die Welle 7 ist ein Exzenter 10 montiert, der sich mit der Welle 7 um die Achse 7' dreht. Der Exzenter 10 enthält einen achsnahen Bereich 10a und einen achsfernen Bereich 10b, wobei der achsnahe Bereich 10a sich lediglich über eine Ruheposition erstreckt, während der achsferne Bereich 10b den überwiegenden Teil des Umfangs des Exzenters 10 einnimmt.

In der Montageplatte 9, an der dem Handknauf 6 abgewandten Seite, ist weiterhin eine Führung 11 vorgesehen. Die Führung 11 ist bevorzugt als Schlitz ausgebildet und erstreckt sich von einem Bereich um die Achse 5' an der der Welle 7 abgewandten Seite der Achse 5' radial nach außen.

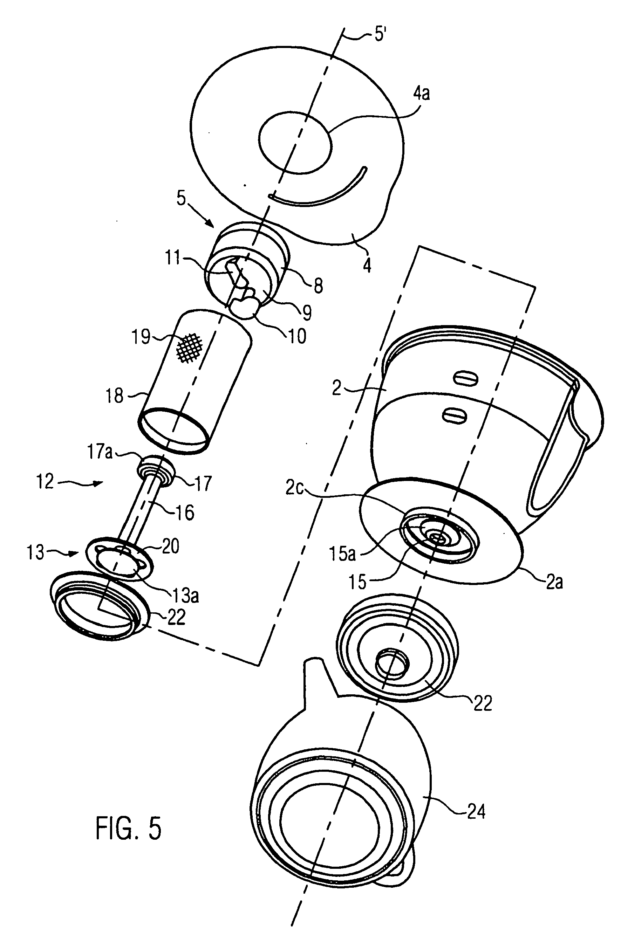

Wie insbesondere auch Fig. 5 zeigt, bildet die Halterung 8 mit der Schaltuhr 5, der Montageplatte 9, dem Exzenter 10 und der Führung 11 eine Einheit, die zum Reinigen auf einfache Weise aus der Öffnung 4a des Deckels 4 herausgenommen werden kann. Die Halterung 8 hat eine im Wesentlichen zylindrische Außenfläche, gegebenenfalls versehen mit einem Anschlag für den Rand der Öffnung 4a, so dass die Schaltuhr 5 in jeder Stellung durch die Öffnung 4a gesteckt werden kann.

Die Schaltuhr 5 ist über eine insgesamt mit 12 bezeichnete Verbindungseinrichtung mit einem Absperrorgan 13 verbunden. Das Absperrorgan verschließt eine Auslasseinrichtung 14 aus dem Brühraum 3, wie nachfolgend noch näher erläutert wird.

Das Absperrorgan 13 ist als Verschlussdichtung, z.B. aus Silikon, ausgebildet und dichtet eine Auslassöffnung 15 der Auslasseinrichtung 14 im Bodenbereich 2b ab. Die Auslassöffnung 15 ist bevorzugt am unteren Ende eines sich verjüngenden Wandteils 15a angeordnet, der dem Brühgefäß 2 zugeordnet ist und bevorzugt einstückig mit dem Brühgefäß 2 ausgebildet ist. Die Auslassöffnung 15 liegt innerhalb des Zentrierrandes 2c.

Das Absperrorgan 13 enthält einen elastisch verformbaren, tellerförmigen Teil 13a, dessen Durchmesser wesentlich größer ist als der Durchmesser des kegeligen Wandteils 15a und der dadurch als Ventilteil wirkt. Der tellerförmige Teil 13a des Absperrorgans 13 weist eine geringe Festigkeit auf, bevorzugt bedingt durch eine geringe Wandstärke, so dass er unter dem Einfluss von relativ geringen Kräften verformbar ist. Der tellerförmige Teil 13a liegt abdichtend oberhalb des kegeligen Wandbereichs 15a an, wenn sich das Absperrorgan 13 in seiner in Fig. 1 dargestellten Schließposition befindet.

Die Auslassöffnung 15 ist koaxial zur Achse 5' angeordnet. Das Absperrorgan 13 ist ein- oder mehrteilig und im Wesentlichen symmetrisch zu einer Mittellinie ausgebildet, die mit der Achse 5' zusammenfällt, wenn sich das Absperrorgan 13 in der in Fig. 1 gezeigten Schließposition befindet. Wie Fig. 1 zeigt, erstreckt sich das Absperrorgan 13 in der Schließposition in die Auslassöffnung 15 hinein, während der tellerförmige Bereich 13a auf der Auslassöffnung 15 abdichtend aufliegt und durch den Druck des sich im Brühbehälter 2 befindenden Wassers in Dichtstellung gedrückt wird.

Die Verbindungseinrichtung 12 enthält ein Verbindungselement 16, das im dargestellten Ausführungsbeispiel stangen- oder bolzenförmig ausgebildet ist. An einem Ende des Verbindungselementes 16 ist das Absperrglied 13 befestigt. Das Verbindungselement 16 ist mit senkrechter Mittellinie angeordnet, wobei seine Mittellinie mit der Achse 5' fluchtet. Das dem Absperrorgan 13 gegenüberliegende Ende des Verbindungselementes 16 ist in der Führung 11 so aufgenommen, dass das Verbindungselement 16 zentriert wird und in der Schließstellung die Mittellinie des Verbindungselementes 16 mit der Achse 5' fluchtet.

Unterhalb der Führung 11 ist am Verbindungselement 16 ein Betätigungselement 17 angeordnet. Das Betätigungselement 17 ist im dargestellten Ausführungsbeispiel einstückig mit dem Verbindungselement 16 ausgebildet, und ist mit einer im Wesentlichen zylindrischen oder rotationssymmetrischen Umfangsfläche 17a versehen, mit der das Betätigungselement 17 an der Umfangsfläche des Exzenters 10 anliegt bzw. mit ihr in Eingriff kommen kann.

Das Verbindungselement 16 ist in einem Gehäuse 18 untergebracht, das im Wesentlichen zylindrisch ausgebildet ist und sich koaxial zur Achse 5' erstreckt. Am Gehäuse 18 ist, bevorzugt lösbar, die Halterung 8 für die Schaltuhr 5 angeordnet.

Das Gehäuse 18 ist kleiner als der Brühbehälter 2 (zur Ausbildung des Brühraums 3) und enthält wenigstens bereichsweise eine Siebanordnung 19, die als Teil der Wandung des Gehäuses 18 ausgebildet ist oder gegebenenfalls die Wandung des Gehäuses 18 zumindest außerhalb der Auslassöffnung 15 bildet. Die Siebanordnung 19 ist so ausgestaltet, dass der Getränkerohstoff für das Brühgetränk, also insbesondere die Teeblätter oder das ausgelaugte Kaffeemehl, nicht hindurchtreten kann und somit nicht durch die Auslassöffnung 15 gelangt.

Im bevorzugten Ausführungsbeispiel ist das Gehäuse aus zylindrisch gebogenem Siebmaterial hergestellt und mit seiner einen Stirnseite auf einen Absatz der Montageplatte 9 aufgeschoben. Das Gehäuse 18 ist mit der der Montageplatte 9 abgewandten Stirnseite oberhalb der Auslassöffnung 15 zentriert. Dies geschieht im dargestellten Ausführungsbeispiel über einen Halteabsatz 21, der an der dem Zentrierring 2c entgegengesetzten Seite des Randes 2a ausgebildet ist, und eine Dichtung 22 enthält. Die Dichtung 22 ist elastisch verformbar und hält das Gehäuse 18 lösbar und in einer im Wesentlichen aufrechten Position im Inneren des Brühgefäßes 2 fest. Gleichzeitig wird dadurch der Brühraum 3 gegen die Auslassöffnung 15 abgedichtet.

Mit dem Verbindungselement 16 ist ein Abstandshalter 20 verbunden, der für Flüssigkeit durchlässig ist und das Verbindungselement 16 im Gehäuse 18 zentriert. Der Abstandshalter 20 reicht somit vom Verbindungselement 16 annähernd bis zur Wandung des Gehäuses 18 und liegt bevorzugt auf dem Bodenbereich 2b auf. Der Abstandshalter 20 ist bevorzugt als flüssigkeitsdurchlässige Scheibe ausgebildet.

Im Betrieb wird der Brühbehälter 2 mit dem Gehäuse 18, der darin untergebrachten Verbindungseinrichtung 12 und dem Absperrorgan 13 auf das Aufnahmegefäß 24 aufgesetzt. Der Deckel 4 kann zusammen mit der Schaltuhr 5 oder getrennt von ihr abgenommen werden, so dass in den Brühraum 3 außerhalb des Gehäuses 18 Getränkerohstoff, also beispielsweise Teeblätter, eingefüllt werden kann. Dann wird mit Wasser aufgegossen und der Deckel 4 aufgelegt. An der Schaltuhr 5 wird durch Verdrehen des Knaufs 6 die gewünschte Ziehzeit eingestellt. Dieses Einstellen der Ziehzeit kann geschehen, während die Schaltuhr mit dem Gehäuse 18 verbunden ist, kann jedoch auch geschehen, während die Schaltuhr 5 vom Benutzer in der Hand gehalten wird, wodurch eine wesentlich effektivere und einfachere Einstellung der Ziehzeit möglich ist. Dann wird die Schaltuhr 5 wieder mit dem Gehäuse 18 verbunden, wobei darauf geachtet wird, dass der Exzenter 10 mit seiner Ruhestellung am achsnahen Bereich 10a am Betätigungselement 17 anliegt bzw. diesem gegenüberliegt. Das Aufsetzen der Schaltuhr kann in jeder geeignete Winkelposition um die Achse 5' geschehen, da die Umfangsfläche 17a des Betätigungselementes 17 überall den gleichen Abstand zur Achse 5' aufweist, so dass es unerheblich ist, an welcher Winkelstellung um die Achse 5' herum der Exzenter 10 liegt. Die Achse 5' wirkt somit als Montageachse, die die korrekte Position der Teile zueinander festlegt.

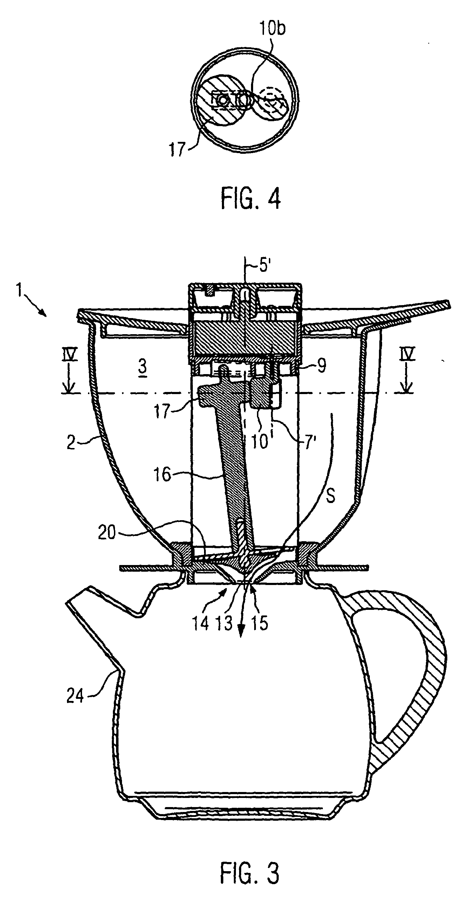

Nach Ablauf der eingestellten Ziehzeit wird durch die Restspannung der Uhrwerksfeder in der Schaltuhr 5 die Welle 7 verdreht, bevorzugt um wenigstens eine halbe bis dreiviertel Umdrehung, wobei sich der achsferne Bereich 10b des Exzenters 10 an der Umfangsfläche 17a des Betätigungselementes 17 anlegt. Dadurch wird das Verbindungselement 16 zur Seite gedrängt und stellt sich in eine Kippstellung, die in Fig. 3 näher dargestellt ist. In der Kippstellung ist das Verbindungselement 16, geführt durch die Führung 11, in eine Stellung gekippt, in der das Absperrorgan 13 die Öffnung 15 freigibt. Dabei legt sich der Abstandshalter 20 an die Wandung des Gehäuses 18 an und wirkt einerseits als Kippführung und verhindert andererseits, dass das Absperrorgan 13 weiter in die Öffnung 15 hineinrutscht und diese wieder verschließt.

Durch das Verkippen des Absperrorgans 13 wird somit ein Strömungspfad S eröffnet, der sich aus dem Brühraum 3 außerhalb des Gehäuses 18 durch die Siebanordnung 19 in das Innere des Gehäuses 18 und von dort durch den Abstandshalter 20, am Absperrorgan 13 vorbei, durch die Auslasseinrichtung 14 in das Aufnahmegefäß 24 erstreckt.

Nach Gebrauch kann die erfindungsgemäße Einrichtung 1 auf einfache Weise zum Reinigen demontiert werden. Da sich durch die Siebanordnung 19 und den gewählten Strömungspfad S die Teeblätter oder der Getränkerohstoff nach wie vor im Brühraum 3 befinden, reicht es aus, nach Abnahme des Deckels zunächst die Einheit aus der Halterung 8 und dem Gehäuse 18 aus dem Brühgefäß 2 herauszunehmen und die Teeblätter aus dem Brühbehälter 2 auszuspülen. Die Demontage der Einheit aus der Halterung 8 und dem Gehäuse 18 ist ebenso einfach. So kann beispielsweise die Halterung 8 einfach vom Gehäuse 18 abgezogen werden, wodurch die Verbindungseinrichtung mit dem Verbindungselement 16, dem Abstandshalter 20, dem Absperrorgan 13 und dem Betätigungselement 17 aus dem Gehäuse 18 entnommen werden kann und ebenfalls unter fließendem Wasser gereinigt werden kann.

Für eine intensivere Reinigung kann die Dichtung 22 vom Behälter 2 abgenommen werden, da sie lediglich dort eingelegt ist. Weiterhin kann das Absperrorgan 13 vom Verbindungselement 16 abgenommen werden, da das aus Silikon bestehende Absperrorgan 13 lösbar am Verbindungselement 16 befestigt, insbesondere aufgeknöpft ist, wie dies in den Fig. 1 und 3 zu sehen ist.

In Abwandlung der beschriebenen und gezeichneten Ausführungsbeispiele kann die zweite Achse für den Exzenter beispielsweise durch ein gesondertes Getriebe, wie z.B. Zahnradgetriebe, angetrieben werden. Es ist weiterhin möglich, das Absperrorgan nicht nur durch eine Kippbewegung, sondem beispielsweise auch durch eine translatorische Bewegung durch den Exzenter öffnen zu lassen.

## Patentansprüche

1. Einrichtung (1) zum Zubereiten eines Brühgetränkes, mit einem Brühraum (3) in einem Brühbehälter (2), einer mit einem Absperrorgan (13) absperrbaren Auslasseinrichtung (14) aus dem Brühbehälter (2) und einer Schaltuhr (5), an der eine gewünschte Ziehzeit einstellbar ist, wobei das Absperrorgan (13) nach Ablauf der eingestellten Ziehzeit über eine mechanische Verbindungseinrichtung (12) von der Schaltuhr (5) selbsttätig in eine Offenstellung bewegbar ist, **dadurch gekennzeichnet, dass** die Schaltuhr (5) lösbar am Brühbehälter (2) angeordnet und in einer eine Montageachse (5') aufweisenden Halterung (8) aufgenommen ist, dass die Verbindungseinrichtung (12) ein koaxial zur Montageachse (5') angeordnetes Betätigungselement (17) für das Absperrorgan (13) aufweist und dass ein mit der Schaltuhr (5) verbundener und um eine im Abstand zur Montageachse (5') angeordnete Achse (7') verdrehbarer Exzenter (10) zum Bewegen des Betätigungselementes (17) vorgesehen ist.

2. Einrichtung nach Anspruch 1, **dadurch gekennzeichnet, dass** die Schaltuhr (5) eine Uhr mit einer zweiten Welle (7) für eine Weckerfunktion ist, die zum Verdrehen des Exzenters (10) verwendet wird.

3. Einrichtung nach Anspruch 1 oder 2, **dadurch gekennzeichnet, dass** das Betätigungselement (17) mit einem sich durch das Innere des Brühraums (3) erstreckenden Verbindungselement (16) mit dem Absperrorgan (13) verbunden ist.

4. Einrichtung nach Anspruch 3, **dadurch gekennzeichnet, dass** das Verbindungselement (16) stab- oder bolzenförmig ausgebildet ist und an einem Ende bewegungsübertragend mit dem Absperrorgan (13) und am anderen Ende bewegungsübertragend mit dem Betätigungselement (17) verbunden ist.

5. Einrichtung nach Anspruch 3 oder 4, **dadurch gekennzeichnet, dass** das Verbindungselement (16) in einer von der Montageachse (5') durchsetzten Führung (11) aufgenommen ist.

6. Einrichtung nach einem der Ansprüche 1 bis 5, **dadurch gekennzeichnet, dass** das Absperrorgan (13) eine Mittellinie aufweist, die in einer Schließstellung parallel zu einer Mittellinie der Auslasseinrichtung (14) verläuft und in der Offenstellung aus der parallelen Ausrichtung verkippt ist.

7. Einrichtung nach Anspruch 6, **dadurch gekennzeichnet, dass** dem Absperrorgan (13) eine Kippführung (20) zugeordnet ist.

8. Einrichtung nach einem der Ansprüche 1 bis 7, **dadurch gekennzeichnet, dass** die Verbindungseinrichtung (12) in einem Gehäuse (18) untergebracht ist, das entfernbar im Brühraum (3) angeordnet ist.

9. Einrichtung nach Anspruch 8, **dadurch gekennzeichnet, dass** die Halterung (8) für die Schaltuhr (5) am Gehäuse (18) vorgesehen ist.

10. Einrichtung nach Anspruch 8 oder 9, **dadurch gekennzeichnet, dass** das Gehäuse (18) abgedichtet im Brühbehälter (2) sitzt.

11. Einrichtung nach einem der Ansprüche 8 bis 10, **dadurch gekennzeichnet, dass** das Gehäuse (18) über eine Siebanordnung (19) mit dem Brühraum (3) in Verbindung steht, wobei ein Ausströmpfad (S) für das Brühgetränk definiert ist, der sich aus dem Brühraum (3) durch die Siebanordnung (19) in das Gehäuse (18) und aus dem Gehäuse (18) durch die Auslasseinrichtung (14) erstreckt.

## Claims

1. Device (1) for preparing a brewed beverage, comprising a brewing chamber (3) in a brewing container (2), an outlet device (14) from the brewing container (2), the outlet device being closable by a closure mechanism (13), and a time switch (5), with which the desired brewing time may be set, the closure mechanism (13) being automatically displaceable into an open position by the time switch (5) via a mechanical connection device (12) after the set brewing time has elapsed, **characterised in that** the time switch (5) is releasably arranged on the brewing container (2) and is received in a holder (8) which has an assembly axis (5'), **in that** the connection device (12) comprises an actuation element (17), arranged coaxially with the assembly axis (5'), for actuating the closure mechanism (13), and **in that** a cam (10), which is connected to the time switch (5) and can be rotated about an axis (7') which is arranged at a distance from the assembly axis (5'), is provided to displace the actuation element (17).

2. Device according to claim 1, **characterised in that** the time switch (5) is a clock with a second shaft (7) for an alarm function, the second shaft being used to rotate the cam (10).

3. Device according to either claim 1 or claim 2, **characterised in that** the actuation element (17) is connected to the closure mechanism (13) by a connection element (16) which extends through the interior of the brewing chamber (3).

4. Device according to claim 3, **characterised in that** the connection element (16) is formed so as to be bar-shaped or pin-shaped and is connected at one end to the closure mechanism (13) in a movement-transferring manner and at the other end is connected to the actuation element (17) in a movement-transferring manner.

5. Device according to either claim 3 or claim 4, **characterised in that** the connection element (16) is received by a guide (11) through which the assembly axis (5') passes.

6. Device according to any one of claims 1 to 5, **characterised in that** the closure mechanism (13) has a centre line which extends parallel to a centre line of the outlet device (14) in the closed position and is tilted out of its parallel alignment in the open position.

7. Device according to claim 6, **characterised in that** a tilting guide (20) is associated with the closure mechanism (13).

8. Device according to any one of claims 1 to 7, **characterised in that** the connection device (12) is accommodated in a housing (18) which is removably arranged in the brewing chamber (3).

9. Device according to claim 8, **characterised in that** holder (8) for the time switch (5) is provided on the housing (18).

10. Device according to either claim 8 or claim 9, **characterised in that** the housing (18) rests in the brewing container (2) in a sealed manner.

11. Device according to any one of claims 8 to 10, **characterised in that** the housing (18) is connected to the brewing chamber (3) via a sieve arrangement (19), an outflow path (S), which extends from the brewing chamber (3) through the sieve arrangement (19) into the housing (18) and out of the housing (18) through the outlet device (14), being defined for the brewed beverage.

## Revendications

1. Dispositif (1) pour la préparation d'une boisson chaude, avec une enceinte de chauffe (3) dans un récipient de chauffe (2), un dispositif d'évacuation (14), susceptible d'être isolé à l'aide d'un organe d'isolement (13), pour évacuer du récipient de chauffe (2), et une minuterie (5), à laquelle un temps d'infusion souhaité peut être réglé, l'organe d'isolement (13), après expiration du temps d'infusion réglé, par la minuterie (5), étant déplaçable automatiquement en une position d'ouverture, par l'intermédiaire d'un dispositif de liaison (12) mécanique, **caractérisé en ce que** la minuterie (5) est disposée de manière désolidarisable sur le récipient de chauffe (2) et est logée dans une fixation (8) présentant un axe de montage (5'), **en ce que** le dispositif de liaison (12) présente un élément d'actionnement (17), disposé coaxialement par rapport à l'axe de montage (5'), pour l'organe d'isolement (13), et **en ce qu'**un excentrique (10), susceptible de tourner autour d'un axe de rotation (7') disposé à distance de l'axe de montage (5'), est prévu pour mouvoir l'élément d'actionnement (17).

2. Dispositif selon la revendication 1, **caractérisé en ce que** la minuterie (5) est une horloge avec un deuxième arbre (7) pour une fonction de réveil, utilisé pour faire tourner l'excentrique (10).

3. Dispositif selon la revendication 1 ou 2, **caractérisé en ce que** l'élément d'actionnement (17) est relié à un élément de liaison (16), s'étendant à l'intérieur de l'enceinte de chauffe (3), reliant à l'organe d'isolement (13).

4. Dispositif selon la revendication 3, **caractérisé en ce que** l'élément de liaison (16) est réalisé en forme de barre ou de boulon et est relié à une extrémité, en transmettant un mouvement, à l'organe d'isolement (13) et relié, à l'autre extrémité, en transmettant un mouvement, à l'élément d'actionnement (17).

5. Dispositif selon la revendication 3 ou 4, **caractérisé en ce que** l'élément de liaison (16) est logé dans un guidage (11) traversé par l'axe de montage (5').

6. Dispositif selon l'une des revendications 1 à 5, **caractérisé en ce que** l'organe d'isolement (13) présente un axe médian s'étendant parallèlement à un axe médian du dispositif d'évacuation (14), lorsqu'on se trouve en une position de fermeture et incliné hors de l'orientation parallèle, lorsqu'on se trouve en une position d'ouverture.

7. Dispositif selon la revendication 6, **caractérisé en ce qu'**un guidage de basculement (20) est associé à l'organe d'isolement (13).

8. Dispositif selon l'une des revendications 1 à 7, **caractérisé en ce que** le dispositif de liaison (12) est logé dans un boîtier (18) disposé de manière amovible dans l'enceinte de chauffe (3).

9. Dispositif selon la revendication 8, **caractérisé en ce que** la fixation (8) pour la minuterie (5) est prévue sur le boîtier (18).

10. Dispositif selon la revendication 8 ou 9, **caractérisé en ce que** le boîtier (18) est monté de façon étanche dans le récipient de chauffe (2).

11. Dispositif selon l'une des revendications 8 à 10, **caractérisé en ce que** le boîtier (18) est relié à l'enceinte de chauffe (3) par l'intermédiaire d'un agencement à tamis (19), un chemin de sortie d'écoulement (S) pour la boisson chaude étant défini, s'étendant de l'enceinte de chauffe (3) en passant par l'agencement à tamis (19) disposé dans le boîtier (18) et en sortant du boîtier (18) par le dispositif d'évacuation (14).
